# EUROPEAN PATENT SPECIFICATION

(11) **EP 3 310 468 B1**
(45) Date of publication and mention of the grant of the patent: **28.08.2019**
(21) Application number: 16744901.6
(22) Date of filing: 06.06.2016
(51) Int. Cl.: B01F 3/18, B01F 15/04, B01F 13/10, B29B 7/60, G05D 11/13, B29C 48/285

(54) **BLENDER UNIT FOR BLENDING MATERIALS AND METHOD THEREFOR**
MISCHEREINHEIT ZUM MISCHEN VON MATERIALIEN UND VERFAHREN DAFÜR
UNITÉ MÉLANGEUSE PERMETTANT DE MÉLANGER DES MATÉRIAUX ET PROCÉDÉ ASSOCIÉ

(30) Priority: 17.06.2015 NL 2014979
(43) Date of publication of application: 25.04.2018
(73) Proprietor: Dersjant, Gerhard Cornelis, 8601 VB Sneek (NL)
(72) Inventor: Dersjant, Gerhard Cornelis, 8601 VB Sneek (NL)
(74) Representative: Verdijck, Gerardus
(86) International application number: PCT/NL2016/050403
(87) International publication number: WO 2016/204605

(56) References cited:
- EP-A1- 2 143 484
- EP-A2- 0 911 130

## Description

The present invention relates to a blender unit that is configured for blending materials and providing a composition of mixture. The blender unit is specifically configured for blending solid materials in a controlled gravimetric way.

Conventional blender units mix a number of materials using a weighing bin with a number of operated valves. This dosing is also referred to as gravity fed mixing or blending. By the gain in weight the ratio between the different materials is controlled batch wise. The batch is delivered in a mixing chamber and actively mixed. Optionally, during mixing in the mixing chamber, a new batch is weighed in the weighing bin.

EP 0 911 130 A2 and EP 2 143 484 A1 disclose a blender for delivery of blend additives.

Accurately dosing additives to the mixture, especially dosing a relatively small amount of additives, requires a relatively mixing time to distribute the additives evenly over the mixture. This reduces the capacity of the conventional blender units. In fact, the actual capacity of the blender unit that can be achieved in practice depends on the actual recipe that is used.

The object of the invention is to obviate the above mentioned problems and to provide a blender unit that provides a mixture according to a recipe more effectively and efficiently as compared to conventional blender units.

This object is achieved with the blender unit for blending materials according to claim 1.

By dividing the recipe in a number of base materials and a number of additives, two recipe segments are defined. The base recipe segment contains the base materials and the additive recipe segment contains the additives. This enables effective mixing of the different recipe segments.

The number of base materials of the base recipe segment, preferably one to four different base materials, is provided in hoppers. From the hoppers the base materials are provided to a weighing bin that controls the ratio between the different base materials according to the recipe using a number of valves. The mixing chamber receives the mixture from the weighing bin and thoroughly mixes the base materials using a mixing element, preferably a mixer. This results in a base mixture that is achieved in a batch operation of mixing the base materials according to the base recipe segment.

By providing an in-line dosing chamber that is directly connected to the outlet of the mixing chamber, a number of additives can be provided using respective dosing elements that are configured for dosing an additive into the stream or flow of mixture of base materials in a (semi)-continuous process. By dosing the additives in the continuous flow of the mixture, preferably as a percentage of the basic mixture stream, an accurate mixing of the additive can be achieved, also at low dosage percentage. Also, different types of material can be mixed relatively easily.

Batch wise mixing of the base materials and in-line dosing of additives achieves a hybrid blending operation with the blender according to the present invention being able to operate as a hybrid blender. This renders the mixing time of the recipe with blender unit according to the invention nearly independent from the actual recipe.

In such hybrid blender the mixing chamber can be operated fast, because no small components need to be mixed. Different base materials can be blended in every required ratio according to the recipe with individual components being in the range of 0-100 % by weight.

Furthermore, by first mixing the base materials in the hybrid blender, a substantial main stream of base materials is achieved wherein the additives can be dosed relatively easily. The main stream has a minimum of 20 % by weight of the recipe, preferably a minimum of 50 % by weight, and more preferably a minimum of 80 % by weight.

As a further advantage, a change of additives can be done easily. Often, additives, such as colorants, need frequent changing according to a new recipe, while the base materials are maintained, optionally with a change of their relative ratios. By dosing the additives in-line changing an additive can be performed relatively fast without requiring cleaning the entire blender unit. This renders the hybrid blender unit according to the invention flexible for changes in the recipe.

Preferably, the blender unit is provided with modular elements for weighing and/or mixing the base materials and the in-line dosing chamber. Optionally, also the feeders for the additives are provided in a modular way. This renders change of components relatively easily, for example for cleaning and maintenance.

Providing an integrated hybrid blender unit with a batch-wise mixing of base materials and continuous in-line dosing of additives directly in the outflow of the mixing chamber, provides an easily controlled blender unit that enables effective mixing of main materials in a batch wise operation and in-line dosing of a number of additives. This enables the hybrid blender unit to be relatively small in size, while having a high capacity. Dosing of additives can be performed accurately. Also, additives can be easily changed without requiring cleaning the entire blender unit. Therefore, the blender unit according to the invention enables an effective and efficient mixing of a number of base materials and a number of additives according to a recipe.

As a further advantage to the reduction in required cleaning efforts when changing an additive, also less material is wasted. This improves the efficiency of the operation. Also, it enables a quick change to a new recipe, thereby improving the flexibility of the blender unit.

The in-line dosing chamber comprises a static mixer. By providing a static mixer a relatively easy in-line mixing of the one or more additives into the stream of base materials can be achieved. As a further effect, cleaning can be done relatively easily when the additives are changed.

Preferably, the mixing element of the mixing chamber comprises a batch wise mixer. This enables effective mixing of the base materials according to the base recipe segment. The mixer in the mixing chamber and the static mixer in the in-line dosing chamber enable the aforementioned hybrid mixing operation with the hybrid blender unit according to the invention.

In a presently preferred embodiment, the blender comprises an interface that is connected to the controller that is configured for receiving input.

By providing a controller that directly controls the batch operation of mixing the base materials according to the base recipe segment and the in-line dosing of the number of additives according to the additive recipe segment, an integrated hybrid blending operation is achieved. By providing an interface easy communication between the blender unit and an operator can be achieved, for example. Recipes can be provided manually to the controller and/or automatically from an external system.

The integrated control of the blending process enables effective control of the overall (hybrid) mixing operation with one interface and one controller capable of mixing a recipe with base materials and additives that can be mixed in a single unit. This renders the overall mixing process effective and efficient.

In a further preferred embodiment according to the present invention, the in-line dosing chamber is removable connected to the weighing bin.

By providing the dosing chamber with a removable connection to the mixing chamber, additives can be dosed directly in the stream of base materials that are mixed according to the base recipe segment leaving the mixing chamber. This enables an effective dosing of the additives, while enabling frequent changes of the additives without requiring cleaning the entire blender unit. Furthermore, maintenance and repair can be performed off-line by replacing the dosing chamber as a sub-unit, such that the blender unit can maintain its operation. This improves the effectivity and/of efficiency of the blender unit according to the present invention.

In a further preferred embodiment, the weighing bin and/or weight feeder comprises a load cell.

By providing a load cell, the weighing bin can measure the amount of base material that is provided to the weighing bin. This enables a so-called "gain in weight" weighing operation for the base materials, preferably two to four base materials. Providing the feeders with a load cell enables so-called "loss in weight" operation, wherein the amount of additives that is actually dosed in-line into the main stream of base materials exiting the mixing chamber is determined by the loss in weight of the materials in the respective feeders. This enables the accurate weighing of the amount of additives that is dosed into the stream of base materials.

In a further preferred embodiment according to the present invention, the blender unit further comprises refill-equipment configured for supplying additive material to the weight feeders.

By providing refill equipment, the weight feeders can be accurately provided with additive material, especially in combination with providing the weight feeder with a load cell. This enables control of the amount of additives that is used in the operation. This further reduces waste of (additive) material.

In a presently preferred embodiment the base recipe segment consists of solid materials. The preferred batch wise mixer enables mixing a range of solid materials with different characteristics into a base mixture. Preferable, the additives comprise one or more colorants. In-line dosing the colorants enables accurate dosing into the base mixture that may comprise solid materials having different characteristics. The mixture according to the recipe is used in manufacturing plastic products like PET preforms, packaging products and cables, for example. It will be understood that similar effects with the (hybrid) blender unit according to the invention can be achieved with other materials and/or applications.

The invention further relates to a method for blending materials according to a recipe, the method comprising the steps of:
- providing a blender unit as described herein;
- dividing the recipe into a base segment recipe and an additive segment recipe;
- mixing base materials in the weighing bin according to the base segment recipe;
- dosing the additives in the in-line dosing chamber according to the additive segment recipe; and
- delivering the mixture at the blender outlet.

Such method provides the same effects and advantages as those mentioned in relation to the blender unit. The method enables an effective and efficient blending of materials, such as solid materials. In a preferred embodiment, the integrated and modular approach enables an effective cleaning and change of additives with limited waste of material. This provides an efficient and flexible method.

Furthermore, dividing the recipe into a base recipe segment and an additive recipe segment enables a hybrid blending method. In this method the base recipe segment is batch wise mixed in the mixing chamber and the additive recipe segment is continuously added to the base stream of base materials in a substantial continuous operation. This enables effective and efficient mixing of the additives into the mixture and results in the throughput time or manufacturing time becoming more independent of the specific recipe.

In a presently preferred embodiment, the blender unit is configured for blending solid materials. This may involve solid materials that are used in plastic manufacturing operation with additives including colorants.

Further advantages, features and details of the invention are elucidated on basis of preferred embodiments thereof, wherein reference is made to the accompanying drawings, in which:
- Figure 1 shows a blending unit according to the invention; and
- Figure 2 shows the modular approach of a blender unit of Figure 1.

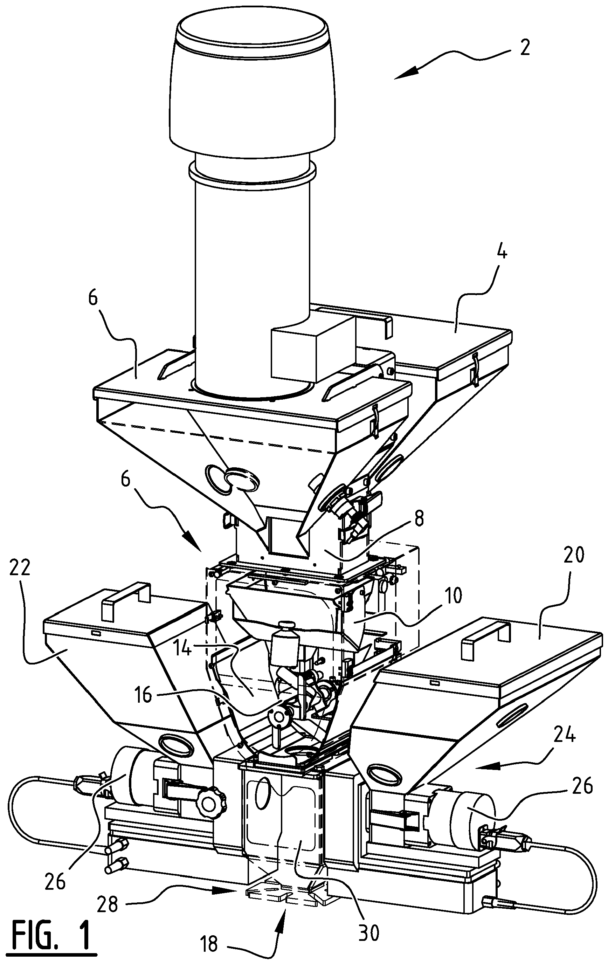

Blender unit 2 (Figure 1) comprises a number of material hoppers 4, 6. In the illustrated embodiments, two different base materials are provided into hoppers 4, 6 that leave hoppers 4, 6 by two controllable valves 8 entering weighing bin 10. Weighing bin 10 comprises load cell 12 to enable providing individual base materials according to their respective ratio according to the recipe into the weighing bin.

Below weighing bin 10 there is provided mixing chamber 14 comprising mixer 16 for mixing base materials from hoppers 4, 6 that have been weighed in weighing bin 10. From outlet 38 of mixing chamber 14 the mixed base stream leaves mixing chamber 14 and enters in-line dosing chamber 28. In chamber 28 the base stream is mixed with in-line dosed additives from feeders 20, 22. Feeders 20, 22 are provided with load cell 24 and drive 26. Feeders 20, 22 provide additives to in-line dosage chamber 28. Chamber 28 is provided with static mixer 30 capable of accurately mixing the additives into the main stream.

Feeders 20, 22 comprise a screw element that is driven by drives 26 and controlled by a controller. Optionally, additional guiding elements, such as plates, are provided in chamber 28 to improve the dosing.

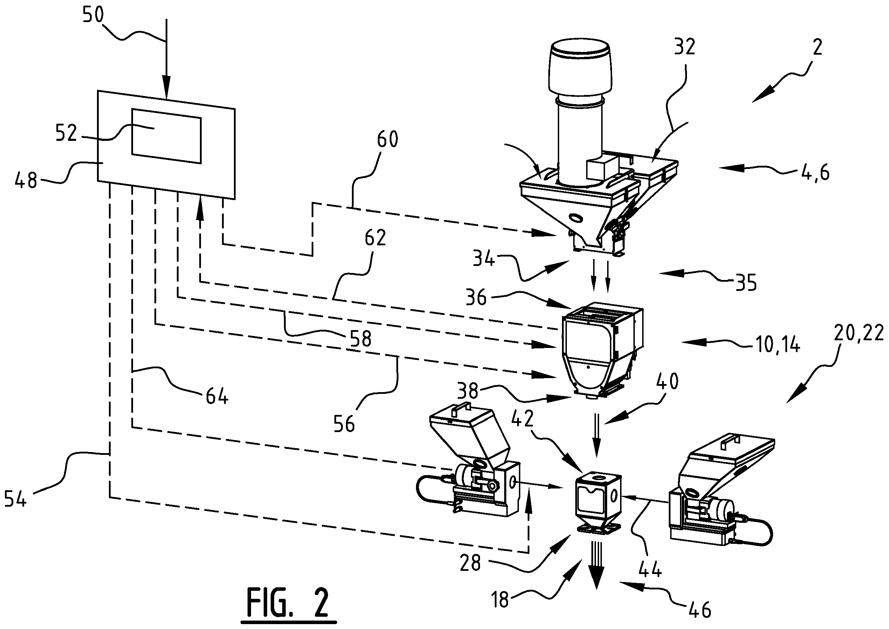

Blending (solid) base materials and additives with (hybrid) blender unit 2 (Figure 2) starts with providing base materials via inlets 32 to hoppers 4, 6. From outlet 34 of hoppers 4, 6 base materials 35 are provided at inlet 36 of weighing bin 10. After mixing the base materials in the desired ratio according to the recipe, and specifically the base recipe segment thereof, in mixing chamber 14, stream of mixed base materials 40 leaves mixing chamber 14 through outlet 38 and enters in-line dosing chamber 28 at inlet 42 thereof. The stream of weighed and mixed base materials 40 is provided directly to in-line dosing chamber 28.

Feeders 20, 22 provide a flow of additives 44 to dosing chamber 28. In chamber 28 static mixer 30 mixes additives into stream of base materials 40 to provide the resulting mixture or blend 46 according to the desired recipe at outlet 18.

In the illustrated embodiment controller 48 receives recipe 50 from external system and/or through input means 52 such as a touch screen. Controller 48 determines control inputs 54 to dosing elements of feeders 20, 22, including drives 26. Furthermore, controller 48 determines control inputs 56 to weighing and mixing chamber 10, 14, and control inputs 58 to weighing bin 10, and control inputs 60 to valves 8. Controller 48 receives measurement signals 62 from weighing bin 10 and measurement signal 64 from feeders 20, 22. It will be understood that additional and/or alternative sensors and signals could also be envisaged in relation to blender unit 2.

The present invention is by no means limited to the above described preferred embodiments thereof. The rights sought are defined by the following claims wherein the scope of which many modifications can be envisaged.

## Claims

1. Blender unit (2) for blending materials according to a recipe (50), comprising:
- a number of material hoppers (4,6) for individual base materials (35) of a base segment of the recipe, the hoppers having an inlet (32) and an outlet (34);
- a weighing bin (10) that is connected to the outlets of the material hoppers and is configured for weighing the base materials of the base recipe segment;
- a mixing chamber (14) having an outlet (38) and a mixing element (16) configured for mixing the base materials received from the weighing bin into a mixture (40) of base materials;
- an in-line dosing chamber (28) that is directly connected to the outlet (38) of the mixing chamber and is provided with a number of dosing elements configured for dosing a number of additives of an additive segment of the recipe into the mixture of base materials received from the mixing chamber, and the in-line dosing chamber having a blender outlet (18);
- a controller (48) configured for controlling the outlet of the material hoppers, weighing bin, mixing element, and dosing elements such that a mixture according to the recipe can be provided at the blender unit,
**characterized by** a number of weight feeders (20,22) configured for providing the one of more additives of the additive recipe segment to the in-line dosing chamber, wherein the in-line dosing chamber comprises a static mixer (30).

2. Blender according to claim 1, wherein the mixing element comprises a batch wise mixer.

3. Blender according to claim 1 or 2, further comprising an interface (52) that is connected to the controller and is configured for receiving input.

4. Blender according to one or more of the foregoing claims, wherein the in-line dosing chamber is removable connected to the weighing bin and/or mixing chamber.

5. Blender according to one or more of the foregoing claims, wherein the weighing bin comprises a load cell (12).

6. Blender according to one or more of the foregoing claims, wherein the weight feeders comprise a load cell (24).

7. Blender according to one or more of the foregoing claims, further comprising refill-equipment configured for supplying additive material to the weight feeders.

8. Method for blending materials according to a recipe (50), comprising the steps of:
- providing a blender unit (2) according to one or more of the foregoing claims;
- dividing the recipe into a base segment recipe and an additive segment recipe;
- mixing base materials in the weighing bin (10) according to the base segment recipe;
- dosing the additives in the in-line dosing chamber (28) according to the additive segment recipe; and
- delivering the mixture.

9. Method according to claim8, further comprising the steps of batch wise mixing the base materials according to the base recipe segment and in-line mixing the additives according to the additive recipe segment.

10. Method according to claim 8 or 9, further comprising the step of providing the base segment recipe that consists of solid materials.

11. Method according to claim 10, further comprising the step of providing the additive segment recipe that comprises colorants.

## Patentansprüche

1. Mischereinheit (2) zum Mischen von Materialien gemäß einer Rezeptur (50), umfassend:
- eine Anzahl von Materialbehältern (4, 6) für einzelne Basismaterialien (35) von einem Basissegment einer Rezeptur, wobei die Behälter einen Einlass (32) und einen Auslass (34) aufweisen;
- einen Wiegebehälter (10), welcher mit den Auslässen von den Materialbehältern verbunden ist und zum Wiegen der Basismaterialien von dem Basisrezeptursegment konfiguriert ist;
- eine Mischkammer (14), welche einen Auslass (38) und ein Mischelement (16) aufweist, welches zum Mischen der Basismaterialien, welche von dem Wiegebehälter erhalten werden, in eine Mischung (40) aus Basismaterialien konfiguriert ist,
- eine In-Line-Dosierungskammer (28), welche direkt mit dem Auslass (38) von der Mischkammer verbunden ist, und welche mit einer Anzahl von Dosierelementen versehen ist, welche zum Dosieren von einer Anzahl von Additiven von einem Additivsegment der Rezeptur zu einer Mischung von Basismaterialien, welche von der Mischkammer erhalten werden, konfiguriert sind, und wobei die In-Line-Dosierungskammer einen Mischerauslass (18) aufweist;
- einen Controller (48), welcher zum Steuern der Ausgabe der Materialbehälter, des Wiegebehälters, des Mischelements und der Dosierelemente konfiguriert ist, so dass eine Mischung gemäß einer Rezeptur an der Mischereinheit bereitgestellt werden kann, **gekennzeichnet durch** eine Anzahl von Dosierwaagen (20, 22), welche zum Bereitstellen von einem oder mehr Additiven des Additivrezeptsegments an die In-Line-Dosierungskammer konfiguriert sind, wobei die In-Line-Dosierungskammer einen statischen Mischer (30) umfasst.

2. Mischer gemäß Anspruch 1, wobei das Mischelement einen chargenweisen Mischer umfasst.

3. Mischer gemäß Anspruch 1 oder 2, weiterhin eine Schnittstelle (52) umfassend, welche mit dem Controller verbunden ist, und welche zum Empfangen von Input konfiguriert ist.

4. Mischer gemäß einem oder mehreren der vorhergehenden Ansprüche, wobei die In-Line-Dosierungskammer entfernbar mit dem Wiegebehälter und/oder der Mischkammer verbunden ist.

5. Mischer gemäß einem oder mehreren der vorhergehenden Ansprüche, wobei der Wiegebehälter eine Lastzelle (12) umfasst.

6. Mischer gemäß irgendeinem der vorhergehenden Ansprüche, wobei die Dosierwaagen eine Lastzelle (24) umfassen.

7. Mischer gemäß einem oder mehreren der vorhergehenden Ansprüche, weiterhin eine Nachfüllvorrichtung umfassend, welche konfiguriert ist zum Zuführen von Additivmaterial zu den Dosierwaagen.

8. Verfahren zum Mischen von Materialien gemäß einem Rezept (50), die folgenden Schritte umfassend:
- Bereitstellen einer Mischereinheit (2) gemäß einem oder mehreren der vorhergehenden Ansprüche;
- Unterteilen der Rezeptur in eine Basissegmentrezeptur und eine Additivsegmentrezeptur;
- Mischen von Basismaterialien in dem Wiegebehälter (10) gemäß der Basissegmentrezeptur;
- Dosieren der Additive in der In-Line-Dosierungskammer (28) gemäß der Additivsegmentrezeptur; und
- Abgeben der Mischung.

9. Verfahren gemäß Anspruch 8, weiterhin umfassend die Schritte des chargenweisen Mischens der Basismaterialien gemäß dem Basisrezeptursegment und In-Line-Mischen der Additive gemäß dem Additivrezeptursegment.

10. Verfahren gemäß Anspruch 8 oder 9, weiterhin umfassend den Schritt des Bereitstellens der Basissegmentrezeptur, welche aus festen Materialien besteht.

11. Verfahren gemäß Anspruch 10, weiterhin den Schritt des Bereitstellens der Additivsegmentrezeptur umfassend, welche Farbstoffe umfasst.

## Revendications

1. Unité mélangeuse (2) pour le mélange de matériaux selon une recette (50), comprenant :
- un nombre de trémies de matériau (4, 6) pour des matériaux de base individuels (35) d'un segment de base de la recette, les trémies présentant une entrée (32) et une sortie (34) ;
- un bac de pesage (10) qui est raccordé aux sorties des trémies de matériau et est configuré pour peser les matériaux de base du segment de recette de base ;
- une chambre de mélange (14) présentant une sortie (38) et un élément de mélange (16) configuré pour mélanger les matériaux de base reçus du bac de pesage dans un mélange (40) de matériaux de base ;
- une chambre de dosage en ligne (28) qui est directement raccordée à la sortie (38) de la chambre de mélange et est dotée d'un nombre d'éléments de dosage configurés pour le dosage d'un nombre d'additifs d'un segment d'additif de la recette dans le mélange de matériaux de base reçus par la chambre de mélange, et la chambre de dosage en ligne présentant une sortie de mélangeuse (18) ;
- un dispositif de commande (48) configuré pour la commande de la sortie des trémies de matériau, du bac de pesage, de l'élément de mélange, et des éléments de dosage de sorte qu'un mélange selon la recette puisse être fourni sur l'unité de mélangeuse,
**caractérisée par** un nombre de distributeurs pondéraux (20, 22) configurés pour fournir les un ou plusieurs additifs du segment de recette d'additif à la chambre de dosage en ligne,
dans laquelle la chambre de dosage en ligne comprend une mélangeuse statique (30).

2. Mélangeuse selon la revendication 1, dans laquelle l'élément de mélange comprend une mélangeuse par lot.

3. Mélangeuse selon la revendication 1 ou 2, comprenant en outre une interface (52) qui est raccordée au dispositif de commande et est configurée pour recevoir l'entrée.

4. Mélangeuse selon l'une ou plusieurs quelconques des revendications précédentes, dans laquelle la chambre de dosage en ligne est raccordée de manière amovible au bac de pesage et/ou à la chambre de mélange.

5. Mélangeuse selon l'une ou plusieurs quelconques des revendications précédentes, dans laquelle le bac de pesage comprend une cellule de charge (12).

6. Mélangeuse selon l'une ou plusieurs quelconques des revendications précédentes, dans laquelle les distributeurs pondéraux comprennent une cellule de charge (24).

7. Mélangeuse selon l'une ou plusieurs quelconques des revendications précédentes, comprenant en outre l'équipement de remplissage configuré pour fournir du matériau additif aux distributeurs pondéraux.

8. Procédé de mélange de matériaux selon une recette (50), comprenant les étapes de :
- la fourniture d'une unité mélangeuse (2) selon une ou plusieurs des revendications précédentes ;
- la division de la recette en une recette de segment de base et une recette de segment d'additif ;
- le mélange de matériaux de base dans le bac de pesage (10) selon la recette de segment de base ;
- le dosage des additifs dans la chambre de dosage en ligne (28) selon la recette de segment d'additif ; et
- la livraison du mélange.

9. Procédé selon la revendication 8, comprenant en outre les étapes de mélange par lot des matériaux de base selon le segment de recette de base et de mélange en ligne des additifs selon le segment de recette d'additif.

10. Procédé selon la revendication 8 ou 9, comprenant en outre l'étape de fourniture de la recette de segment de base qui se compose de matériaux solides.

11. Procédé selon la revendication 10, comprenant en outre l'étape de fourniture de la recette de segment d'additif qui comprend des colorants.
